**Europäisches Patentamt**

**European Patent Office**

**Office européen des brevets**

(19)

(11) Veröffentlichungsnummer: **0 172 348 B1**

(12) **EUROPÄISCHE PATENTSCHRIFT**

(45) Veröffentlichungstag der Patentschrift: **24.08.88**

(51) Int. Cl.⁴: **F 16 J 15/34**, F 16 J 15/32

(21) Anmeldenummer: **85107382.5**

(22) Anmeldetag: **14.06.85**

(54) **Abdichtung.**

(30) Priorität: **20.07.84 DE 3426805**

(43) Veröffentlichungstag der Anmeldung: **26.02.86 Patentblatt 86/9**

(45) Bekanntmachung des Hinweises auf die Patenterteilung: **24.08.88 Patentblatt 88/34**

(84) Benannte Vertragsstaaten: **DE FR GB**

(56) Entgegenhaltungen:
**DE - A - 1 817 493**
**FR - A - 1 206 985**
**FR - A - 2 296 787**
**US - A - 3 099 073**

**ANTRIEBSTECHNIK, Band 2, Nr. 4, April 1963, Seiten 126-129, Mainz, DE; H. SIEMENSMEYER: "Die Drahtkugellager-Drehverbindung aus Leichtmetall" IDEM**

(73) Patentinhaber: **INA Wälzlager Schaeffler KG, Industriestrasse 1-3, D-8522 Herzogenaurach (DE)**

(72) Erfinder: **Frank, Hubertus, Dipl.-Ing., Troppauer Strasse 8, D-8552 Höchstadt (DE)**
Erfinder: **Gebauer, Rainer, Neuerbstrasse 10, D-8600 Bamberg (DE)**

## Beschreibung

Die Erfindung betrifft eine Abdichtung zwischen zwei Teilen, von denen das eine eine aus elastischem, vorzugsweise polymerem Werkstoff bestehende Dichtung trägt, die aus einem hohlzylindrischen Träger besteht, von dem an wenigstens einer Stirnseite eine Dichtlippe auskragt, die gegen das andere Teil anliegt, wobei der Träger der Dichtlippe einerseits an einer zylindrischen Mantelfläche des einen Teiles anliegt und andrerseits von einem Spannband umgeben ist.

Derartige Abdichtungen finden sowohl zwischen zueinander beweglichen als auch feststehenden Teilen Verwendung.

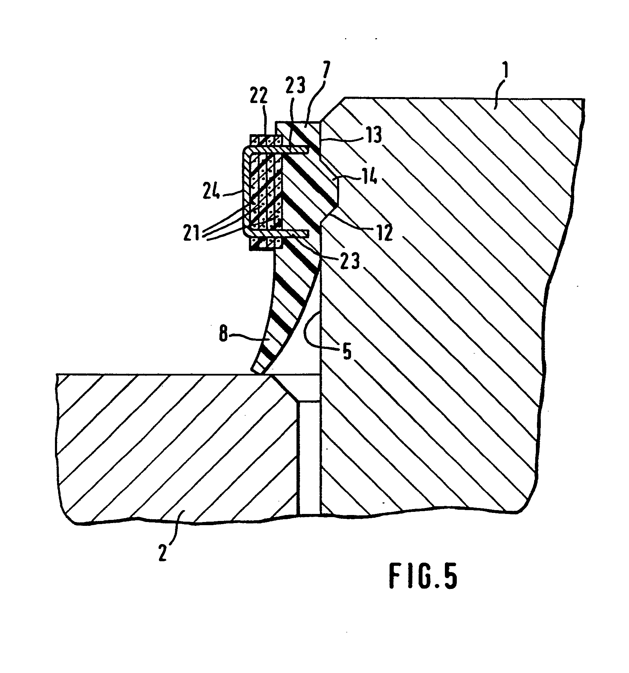

Es ist schon eine derartige Abdichtung bekannt geworden, bei der als Spannband eine Wurmfeder verwendet wurde, die in eine Umfangsrille des Trägers eingesetzt ist. Eine solche Art der Dichtungsbefestigung ist grundsätzlich brauchbar, wenngleich sie nicht in jedem Anwendungsfall eingesetzt werden kann. Ein Hauptnachteil ist, dass insbesondere bei grösserem Durchmesser der Dichtung mit einer derartigen Wurmfeder keine ausreichend grosse Vorspannung erzielbar ist, so dass die Dichtung auf diese Weise nicht sicher genug befestigt werden kann. Hinzu kommt, dass derartige metallische Wurmfedern korrosionsanfällig sind und auch einen gewissen zusätzlichen radialen Bauraum benötigen (Antriebstechnik, Band 2, Nr. 4, April 1963, Seiten 126 – 129, Fig. 5).

Bei einer anderen bekannten Ausführung wird als Spannband ein metallischer Schlauchbinder vorgesehen, dessen beide Enden radial vorstehende Laschen besitzen, durch die eine Spannschraube hindurchtritt. Neben dem Problem mangelnder Korrosionsbeständigkeit stört dabei insbesondere der zusätzlich erforderliche radiale Bauraum für die Laschen und die Spannschraube. Der Platz dafür ist in vielen Fällen nicht vorhanden. Hinzu kommt, dass durch die Anordnung dieser Laschen und der Spannschraube an nur einer Umfangsstelle eie Unwucht entsteht, die sich bei schnell rotierenden Teilen unangenehm bemerkbar macht (FR-A-12 06 985).

Der Erfindung liegt die Aufgabe zugrunde, eine Abdichtung der oben angegebenen Art zu schaffen, die kostengünstig herstell- und montierbar ist und die keinen zusätzlichen Einbauraum beansprucht.

Nach der Erfindung wird diese Aufgabe dadurch gelöst, dass das Spannband als elastisches Band aus polymerem Werkstoff ausgebildet ist, das um den Träger der Dichtung gewickelt ist und dessen aussenliegendes freies Ende mit dem darunterliegenden Band stoffschlüssig, wie durch Kleben oder Schweissen oder formschlüssig verbunden ist.

Da die Abdichtung eine Dichtung mit einem hohlzylindrischen Träger aufweist, an dessen Stirnseite die Dichtlippe auskragt, kann die Dichtung mittels des den Träger nach Art einer Bandage umspannenden Bandes sicher an dem sie tragenden Bauteil befestigt werden, ohne dass durch das Band Kosten entstehen, die mit den durch einen Armierungsring verursachten vergleichbar wären. Ausserdem ist die Bereitstellung von Bändern mit vorgegebenem Durchmesser überflüssig, da das Band für Abdichtungen unterschiedlichen Durchmessers jeweils nur auf die erforderliche Länge zugeschnitten und an seinen Enden verbunden werden muss.

Eine Ausführung der Erfindung sieht vor, dass das den Träger umfassende Band durch insbesondere in Längsrichtung des Bandes verlaufende Fasern verstärkt ist, wobei als Fasern insbesondere Glasfaserstränge, deren Länge der des Bandes entspricht, geeignet sind.

Eine weitere Ausführungsform der Erfindung sieht vor, dass das Band spiralartig in mehreren Lagen um den Träger gewunden ist. Es kann dann ein vergleichsweise dünnes Band verwendet werden, das ausserdem an seiner dem Träger benachbarten Seite eine Klebstoffschicht aufweisen kann, wodurch die Fixierung des Bandes auf dem Träger bzw. der einzelnen Lagen des Bandes zueinander und ausserdem die Aufrechterhaltung der Spannung des Bandes gewährleistet ist.

Nach Varianten der Erfindung kann aber auch vorgesehen sein, dass wenigstens die äusseren Lagen des Bandes an wenigstens einer Umfangsstelle durch eine Punktschweissung stoffschlüssig oder durch ein Befestigungsmittel, z.B. in Art einer Klammer, formschlüssig miteinander verbunden sind. Auch diese Massnahmen dienen zur Aufrechterhaltung der Spannung des Bandes und zur Lagesicherung der einzelnen Lagen des Bandes zueinander.

Um bei der Montage der Abdichtung eine exakte Positionierung der Dichtung auf dem sie tragenden Teil zu ermöglichen, sieht eine Ausführungsform der Erfindung vor, dass die Bohrungsfläche des Trägers und die zylindrische Mantelfläche des einen Teiles mit in Umfangsrichtung verlaufenden Vorsprüngen und Ausnehmungen versehen sind, die formschlüssig ineinander greifen.

Aufgrund der angegebenen Querschnittsform der Dichtung kann diese nach einer Variante der Erfindung durch einen an seinen Enden z.B. durch Kleben oder Vulkanisieren stoffschlüssig verbundenen Abschnitt eines in seinem Querschnitt dem der Dichtung entsprechenden Profils gebildet sein. In diesem Falle wird die Dichtung als Strangprofil gefertigt, auf die für die jeweilige Abdichtung erforderliche Länge zugeschnitten und an ihren Enden verbunden, so dass für Abdichtungen unterschiedlichen Durchmessers nicht jeweils spezielle Dichtungen gefertigt werden müssen.

In den beigefügten Figuren sind Ausführungsbeispiele der Erfindung dargestellt. Es zeigen:

Fig. 1 eine mit einer erfindungsgemässen Abdichtung versehene Wälzlager-Drehverbindung im teilweisen Längsschnitt entsprechend der Linie I-I in Fig. 2,

Fig. 2 eine teilweise Ansicht entsprechend dem Pfeil A in Figur 1 und Fig. 3 bis 5 in vergrösserter Darstellung teilweise Längsschnitte durch mit erfindungsgemässen Abdichtungen versehene Drehverbindungen.

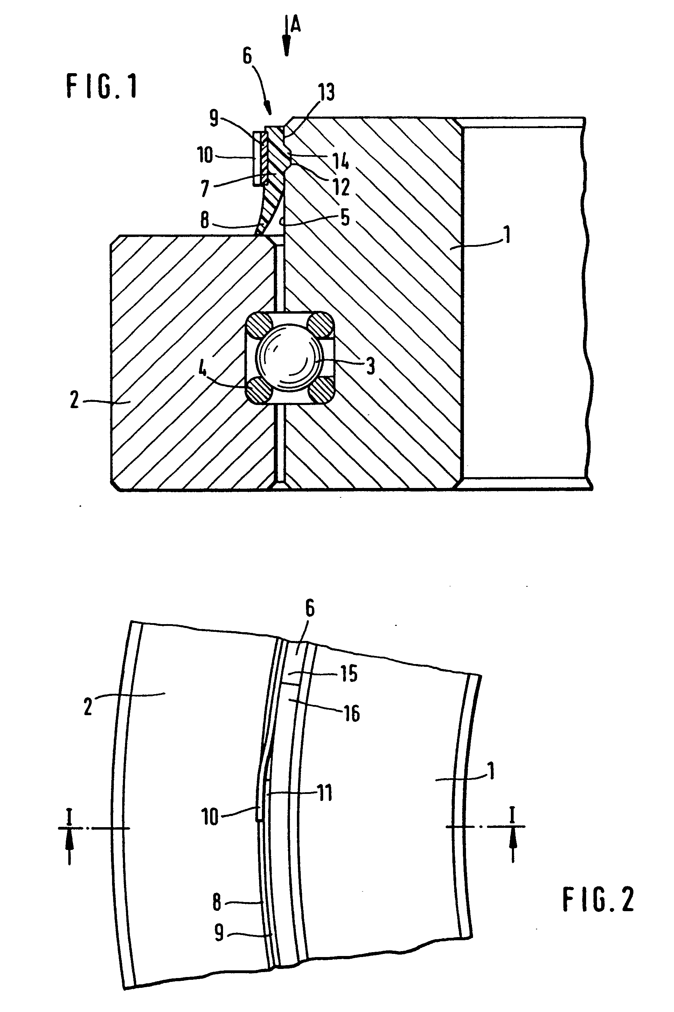

Die in Figur 1 gezeigte erfindungsgemässe Abdichtung ist zwischen den konzentrisch zueinander angeordneten Laufringen 1 und 2 einer Wälzlager-Drehverbindung angeordnet, zwischen welchen Kugeln 3 auf Laufdrähten 4 abrollen.

Der innere Laufring 1 der Drehverbindung weist eine zylindrische Mantelfläche 5 auf, welche eine Dichtung 6 trägt, die aus einem hohlzylindrischen Träger 7 und einer Dichtlippe 8 besteht, die von der einen Stirnseite des Trägers 7 auskragt und an dem äusseren Laufring 2 anliegt.

Der Träger 7 der Dichtung 6 ist von einem aus polymerem Werkstoff bestehenden elastischen Band 9 umspannt, dessen Enden 10 und 11, wie Figur 2 zeigt, einander überlappen. Die einander zugewandten Flächen der Enden 10 und 11 sind miteinander verschweisst.

Um eine exakte Positionierung der Dichtung 6 auf dem inneren Laufring 1 bei der Montage der Abdichtung zu gewährleisten, weist letzterer eine sich über seinen gesamten Umfang erstreckende Ausnehmung 12 auf, in welche die Dichtung 6 mit einem entsprechenden in der Bohrung 13 ihres Trägers 7 angebrachten Vorsprung 14 eingreift.

Die Dichtung 6 besteht übrigens aus einem an seinen Enden 15 und 16 z.B. durch Kleben oder Vulkanisieren stoffschlüssig verbundenen Abschnitt eines in seinem Querschnitt dem der Dichtung 6 entsprechenden Profils. Durch diese Massnahmen ist es überflüssig für Abdichtungen unterschiedlichen Durchmessers jeweils spezielle Dichtungen 6 zu fertigen. Vielmehr können diese in der jeweils erforderlichen Länge von dem Profil abgeschnitten und in der beschriebenen Weise an ihren Enden verbunden werden.

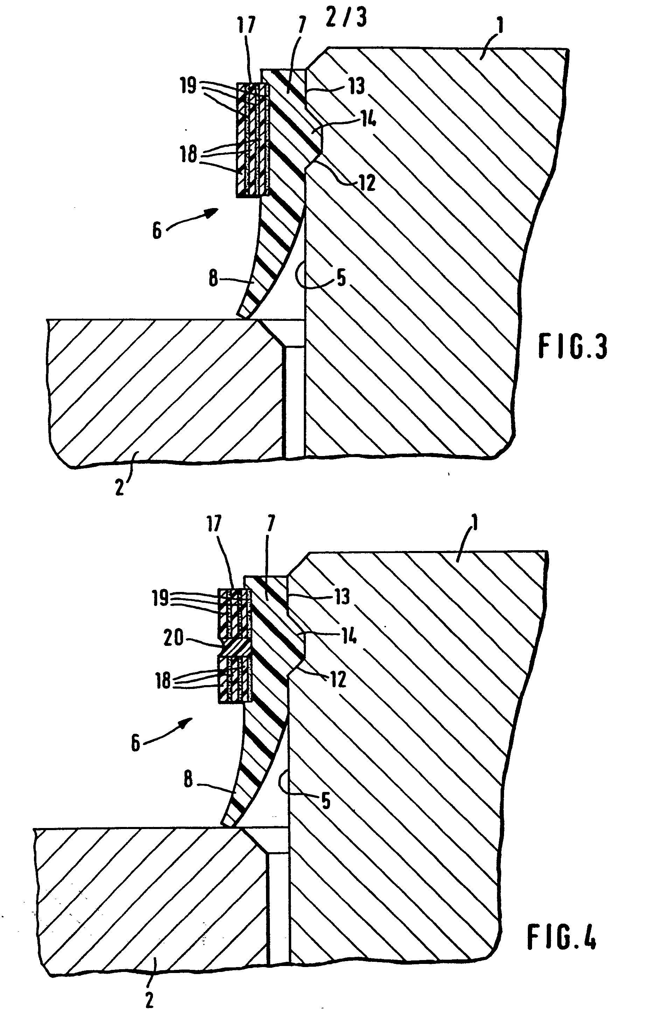

Die in den Figuren 3 bis 5 gezeigten erfindungsgemässen Abdichtungen unterscheiden sich von der zuvor beschriebenen dadurch, dass das aus einem polymeren Werkstoff bestehende Band 17 bzw. 22 spiralartig in mehreren Lagen 18 bzw. 21 um den hohlzylindrischen Träger 7 gewunden ist.

Dabei ist bei der in Figur 3 gezeigten Ausführung auf der dem Träger 7 zugewandten Seite des Bandes 17 eine Klebstoffschicht 19 vorgesehen, die zum einen dazu dient, das Band 17 insgesamt auf dem Träger 7 und die einzelnen Lagen 18 des Bandes 17 zueinander zu fixieren. Ausserdem dient die Klebstoffschicht 19 dazu, die Spannung des Bandes 17 aufrechtzuerhalten.

Bei der in Figur 4 gezeigten Ausführung ist zusätzlich eine Punktschweissung 20 vorgesehen, welche sämtliche Lagen 18 des Bandes 17 erfasst und eine formschlüssige Verbindung zwischen diesen bildet, die zusätzlich die Aufrechterhaltung der Spannung des Bandes 17 sichert. Die Punktschweissung 20 kann auf einfache Weise mittels eines stiftartigen erhitzten Werkzeuges, welches mit seiner Stirnfläche auf das Band 17 gepresst wird, erzeugt werden.

In Figur 5 ist schliesslich eine Ausführung gezeigt, bei der sämtliche Lagen 21 des Bandes 22 von den Schenkeln 23 einer U-förmigen Klammer 24 durchdrungen sind, die ausserdem teilweise in den Träger 7 eindringen. Es wird so die Lage des Bandes 22 auf dem Träger 7 als auch die Lage der einzelnen Lagen 21 des Bandes 22 zueinander formschlüssig fixiert und ausserdem die Aufrechterhaltung der Spannung des Bandes 22 gewährleistet.

Wie aus der Schraffur in Figur 5 ersichtlich ist, ist das Band 22 durch in Längsrichtung des Bandes 22 verlaufende Glasfaserstränge verstärkt.

**Patentansprüche**

1. Abdichtung zwischen zwei Teilen (1, 2), von denen das eine (1) eine aus elastischem, vorzugsweise polymerem Werkstoff bestehende Dichtung (6) trägt, die aus einem hohlzylindrischen Träger (7) besteht, von dem an wenigstens einer Stirnseite eine Dichtlippe (8) auskragt, die gegen das andere Teil (2) anliegt, wobei die Träger (7) der Dichtlippe (8) einerseits an einer zylindrischen Mantelfläche des einen Teiles (1) anliegt und andrerseits von einem Spannband (9, 17, 22) umgeben ist, dadurch gekennzeichnet, dass das Spannband (9, 17, 22) als elastisches Band aus polymerem Werkstoff ausgebildet ist, das um den Träger (7) der Dichtung (6) gewickelt ist und dessen aussenliegendes freies Ende (10) mit dem darunterliegenden Band (9, 17, 22) stoffschlüssig, wie durch Kleben oder Schweissen oder formschlüssig verbunden ist.

2. Abdichtung nach Anspruch 1, dadurch gekennzeichnet, dass das den Träger (7) umspannende Band (2) durch insbesondere in Längsrichtung des Bandes (22) verlaufende Fasern verstärkt ist.

3. Abdichtung nach Anspruch 1 oder 2, dadurch gekennzeichnet, dass das Band (17, 22) spiralartig in mehreren Lagen (18, 21) um den Träger (7) gewunden ist.

4. Abdichtung nach Anspruch 3, dadurch gekennzeichnet, dass das Band (17) an seiner den Träger (7) benachbarten Seite eine Klebstoffschicht (19) aufweist.

5. Abdichtung nach Anspruch 3 oder 4, dadurch gekennzeichnet, dass wenigstens die äusseren Lagen (18) des Bandes (17) an wenigstens einer Umfangsstelle durch eine Punktschweissung (20) stoffschlüssig miteinander verbunden sind.

6. Abdichtung nach Anspruch 3 oder 4, dadurch gekennzeichnet, dass wenigstens die äusseren Lagen (21) des Bandes (22) an einer Umfangsstelle durch ein Befestigungsmittel (24) zusätzlich formschlüssig miteinander verbunden sind.

7. Abdichtung nach einem der Ansprüche 1 bis 6, dadurch gekennzeichnet, dass die Bohrungsfläche (13) des Trägers (7) und die zylindrische Mantelfläche (5) des einen Teiles (1) mit in Umfangsrichtung verlaufenden Vorsprüngen (14) und Ausnehmungen (12) versehen sind, die formschlüssig ineinander greifen.

8. Abdichtung nach einem der Ansprüche 1 bis 7, dadurch gekennzeichnet, dass die Dichtung (6) durch einen an seinen Enden (15 und 16) z.B. durch Kleben oder Vulkanisieren stoffschlüssig verbundenen Abschnitt eines in seinem Querschnitt dem der Dichtung (6) entsprechenden Profils gebildet ist.

## Claims

1. Seal between two parts (1, 2), of which the one (1) carries a seal (6) consisting of an elastic, preferably polymeric material, which consists of a hollow cylindrical support (7) form which a sealing lip (8) juts out on at least one end side, which lip bears against the other part (2), wherein the support (7) of the sealing lip (8) on the one hand bears on a cylindrical outer surface of the one part (1) and on the other hand is embraced by a clamping band (9, 17, 22), characterised in that the clamping band (9, 17, 22) is formed as an elastic band of polymeric material which is wound about the support (7) of the seal (6) and whose outwardly lying free end (10) is connected to the band (9, 17, 22) lying thereunder by union of materials, as by bonding or welding or by interlocking.

2. Seal according to claim 1, characterised in that the band (2) tightened about the support (7) is reinforced by fibres, in particular running in the longitudinal direction of the band (22).

3. Seal according to claim 1 or 2, characterised in that the band (17, 20) is wound spirally about the support (7) in a plurality of layers (18, 21).

4. Seal according to claim 3, characterised in that the band (17) has an adhesive layer (19) on its side adjoining the support (7).

5. Seal according to claim 3 or 4, characterised in that at least the outer layers (18) of the band (17) are connected together by union of materials at at least one peripheral location by a spot weld (20).

6. Seal according to claim 3 or 4, characterised in that at least the outer layers (21) of the band (22) are additionally connected together in interlocking manner at one peripheral location by a fixing means (24).

7. Seal according to one of claims 1 to 6, characterised in that the bore surface (13) of the support (7) and the cylindrical outer surface (5) of the one part (1) are provided with projections (14) and recesses (12) running in the peripheral direction, which engage interlocking in each other.

8. Seal according to one of claims 1 to 7, characterised in that the seal (6) is formed from a section of a profile corresponding in its cross section to that of the seal (6) connected at its ends (15 and 16), by union of materials, e.g. by bonding or vulcanising.

## Revendications

1. Joint d'étanchéité entre deux composants (1, 2), dont l'un (1) porte une garniture (6) constituée par une matière élastique, de préférence polymère, qui comprend un support cylindrique creux (7) duquel fait saillie sur au moins une face frontale une lèvre d'étanchéité (8) qui s'appuie contre l'autre composant (2), le support (7) de la lèvre d'étanchéité (8) étant, d'une part, en contact avec une surface latérale extérieure cylindrique du premier composant (1) et d'autre part, entouré par une bande de serrage (9, 17, 22), caractérisé en ce que la bande de serrage (9, 17, 22) est réalisée sous la forme d'une bande élastique en matière polymère qui est enroulée autour du support (7) de la garniture (6) et dont l'extrémité libre extérieure (10) est reliée à la bande sous-jacente (9, 17, 22) par une liaison matérielle, notamment par collage ou soudage, ou par concordance de forme.

2. Joint d'étanchéité selon la revendication 1, caractérisé en ce que la bande (2) enserrant le support (7) est renforcée par des fibres s'étendant en particulier dans la direction de la longueur de la bande (22).

3. Joint d'étanchéité selon la revendication 1 ou 2, caractérisé en ce que la bande (17, 22) est enroulée en spirale en plusieurs couches (18, 21) autour du support (7).

4. Joint d'étanchéité selon la revendication 3, caractérisé en ce que la bande (17) comporte une couche de colle (19) sur sa face rapprochée du support (7).

5. Joint d'étanchéité selon la revendication 3 ou 4, caractérisé en ce qu'au moins les couches extérieures (18) de la bande (17) sont reliées entre elles en au moins un point de la périphérie par une liaison matérielle par une soudure par points (20).

6. Joint d'étanchéité selon la revendication 3 ou 4, caractérisé en ce qu'au moins les couches extérieures (21) de la bande (22) sont reliées mutuellement, en plus d'une liaison, par concordance de forme, par un moyen de fixation (24), en un point de la périphérie.

7. Joint d'étanchéité selon l'une des revendications 1 à 6, caractérisé en ce que la surface de l'alésage (13) du support (7) et la surface latérale extérieure cylindrique (5) du premier composant (1) comportent des saillies (14) et des évidements (12) s'étendant en direction périphérique et s'emboîtant par concordance de forme.

8. Joint d'étanchéité selon l'une quelconque des revendications 1 à 7 caractérisé en ce que la garniture (6) est constituée par une section, reliée à ses extrémités (15 et 16) par une liaison matérielle, notamment par collage ou vulcanisation, d'un profilé dont la section droite correspond à celle de la garniture (6).

FIG.1

FIG.2

FIG.3

FIG.4

FIG.5